Europäisches Patentamt

European Patent Office

Office européen des brevets

(11) Veröffentlichungsnummer: **0 290 049 B1**

# (12) EUROPÄISCHE PATENTSCHRIFT

(45) Veröffentlichungstag der Patentschrift: **11.11.92**

(51) Int. Cl.⁵: **G01N 27/26**

(21) Anmeldenummer: **88107349.8**

(22) Anmeldetag: **06.05.88**

Die Akte enthält technische Angaben, die nach dem Eingang der Anmeldung eingereicht wurden und die nicht in dieser Patentschrift enthalten sind.

(54) **Vorrichtung zur elektrophoretischen Trennung von Makromolekülen.**

(30) Priorität: **07.05.87 DE 3715170**

(43) Veröffentlichungstag der Anmeldung:
**09.11.88 Patentblatt 88/45**

(45) Bekanntmachung des Hinweises auf die Patenterteilung:
**11.11.92 Patentblatt 92/46**

(84) Benannte Vertragsstaaten:
**AT BE CH DE ES FR GB GR IT LI LU NL SE**

(56) Entgegenhaltungen:
**WO-A-84/02001**
**WO-A-87/01955**
**US-A- 2 992 979**

**TRENDS IN GENETICS Band 12, November 1986, Amsterdam, NL; R. ANAND "Pulsed field gel electrophoresis: a technique for fractionating large DNA molecules", Seiten 278-283**

(73) Patentinhaber: **Ziegler, Andreas**
**Steinweg 37**
**W-3550 Marburg(DE)**

(72) Erfinder: **Ziegler, Andreas**
**Steinweg 37**
**W-3550 Marburg(DE)**
Erfinder: **Geiger, Karl-Heinz**
**Weissdornweg 13**
**W-7400 Tübingen(DE)**

(74) Vertreter: **Münich, Wilhelm, Dr. et al**
**Kanzlei Münich, Steinmann, Schiller Willibaldstrasse 36/38**
**W-8000 München 21(DE)**

## Beschreibung

Die Erfindung bezieht sich auf eine Elektrophoresevorrichtung zur Trennung von Makromolekülen gemäß dem Oberbegriff des Anspruchs 1.

Es sind Elektrophoresevorrichtungen zur Trennung von Makromolekülen aus einer Substanz, z.B. Trennung von Polypeptiden oder Nukleinsäuren bekannt, bei denen die Trennung nach Molekulargewicht oder strukturellen Eigenschaften erfolgt.

Ferner sind seit kurzem auch Verfahren bekannt, die es erlauben, sehr große Nukleinsäuremoleküle oder sogar intakte chromosomale Desoxyribonukleinsäure (DNS) z.B. von Hefezellen (Saccharomyces cerevisiae) zu trennen. Die Verfahren sind beispielsweise die "Pulsed field Gelelektrophorese" (PFGE), die z.B. in der US-PS 4 473 452 beschrieben ist, und die "Orthogonal field alternation Gelelektrophorese" (OFAGE), die von Carle & Olson (Nucl. Acids Res. 12, 5647-5664, 1984) beschrieben worden ist.

Es ist auch möglich, diese Verfahren für die Analyse von chromosomalen Fragmenten. z.B. des Menschen, einzusetzen (Ragoussis et al., FEBS Lett. 204, 1-4, 1986; Lawrance et al., Science 235, 1387-1390, 1987).

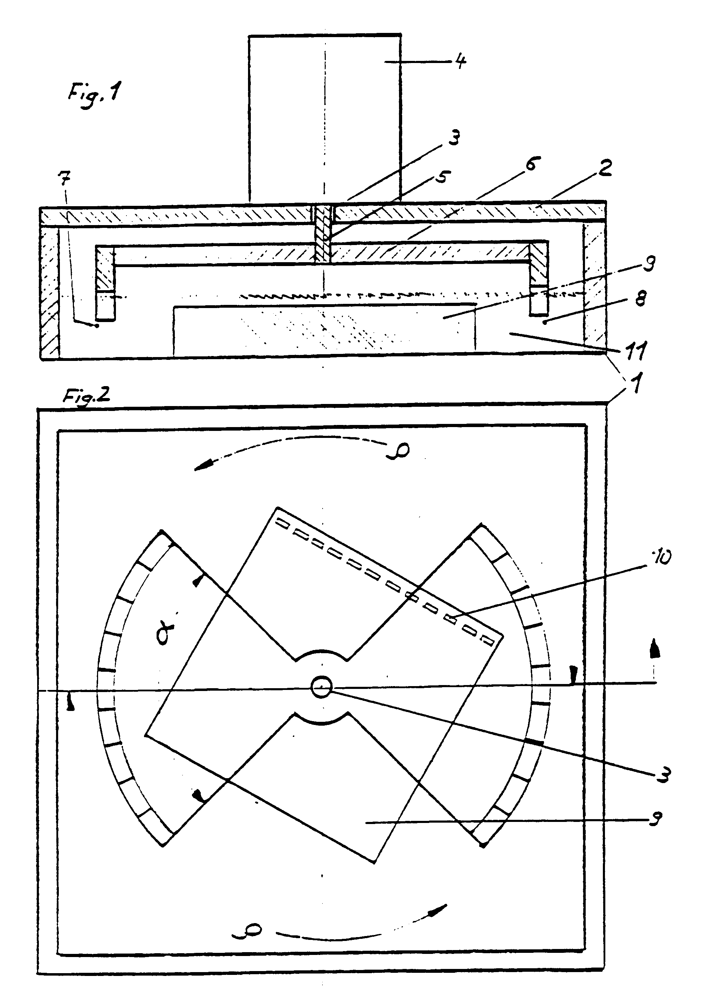

PFGE und OFAGE ist gemeinsam, daß die Tatsache ausgenutzt wird, daß große Nukleinsäuremoleküle sich in einem elektrischen Feld offenbar zuerst orientieren müssen, bevor sie zu wandern beginnen können. Die Dauer dieser Orientierungsphase ist wahrscheinlich direkt proportional zur Länge der Nukleinsäuremoleküle (Smith et al., Meth. Enzymol., in press, 1987). Bei PFGE und OFAGE wirken in einem stumpfen Winkel alternierend (über elektronische Schaltungen) zwei inhomogene elektrische Felder auf die Makromoleküle ein, die sich folglich abwechselnd zuerst in dem einen, dann in dem zweiten elektrischen Felde reorientieren müssen, bevor sie in Richtung der jeweiligen Anode wandern können. Ein schwerwiegender Nachteil dieser Methoden besteht jedoch darin, daß die Feldstärken der beiden inhomogenen Felder lediglich für die in der Mitte befindliche Probe identisch sind, was dazu führt, daß die Mobilitäten von Makromolekülen in unterschiedlichen Proben schwer vergleichbar sind. Außerdem beträgt die Dauer eines typischen Elektrophoreseexperiments 40-72 h (vgl. Fig. 1 in Lawrance et al, Science 235, 1387-1390, 1987).

Aus der Literatur sind Versuche bekannt, um diese Schwierigkeiten zu beseitigen. Chu und Mitarbeiter (Science 234, 1582-1586, 1986) beschreiben eine Modifikation ("Contour-clamped homogeneous electric fields") von OFAGE, die sich eines sechseckigen Elektrophoresegeräts bedient, dessen multiple Elektroden untereinander über Widerstände verbunden sind. Dieses Elektrophoreseverfahren führt zwar zu einer guten Vergleichbarkeit der Mobilität von Makromolekülen verschiedener Proben, bedingt bei Agarose-Gelen von Standardgröße (20 cm x 20 cm) jedoch außergewöhnlich große und schwierig herstellbare Elektrophoresegeräte, mit denen auch erhebliche Nachteile bei Kühlung und Stromversorgung verbunden sind.

Bei "Field inversion Gelelektrophorese" (Carle et al, Science 232, 65-68, 1986) wird die Elektrophorese zwar in konventionellen Geräten mit je einer Kathode und Anode durchgeführt, von Zeit zu Zeit wird aber die Stromrichtung elektronisch umgeschaltet, was zu der erwünschten Reorientierung der Makromoleküle führt. Diese Methode ist jedoch ebenfalls mit Nachteilen behaftet, da das Auflösungsvermögen nicht hoch und die Mobilität der Nukleinsäuremoleküle stark konzentrationsabhängig ist. Zudem korrodieren die Platinelektroden sehr rasch. Andeutungsweise wurde noch eine Methode vorgestellt, bei der sich das Gel mit den zu trennenden Makromolekülen in einem homogenen elektrischen Felde dreht (Anand, Trends Genet. 2, 278-283, 1986). Es dürfte hierbei nicht einfach sein, die Steuerung des schweren Geltisches mit dem Gel zu bewerkstelligen. Gele mit sehr niedrigen Agarosekonzentration, die die Auftrennung von DNS-Molekülen mit mehr als 1.000.000 Basenpaaren erlauben, dürften im Verlaufe der nach heutiger Kenntnis erforderlichen extremen Elektrophoresedauer (1 Woche und länger) kaum die für eine effiziente Trennung der Nukleinsäuremoleküle erforderliche Stabilität besitzen.

Der Erfindung liegt die Aufgabe zugrunde, eine Vorrichtung anzugeben, die unter Beibehaltung der Vorteile der erwähnten Verfahren insbesondere die schnelle und reproduzierbare Trennung von Makromolekülen aus mehreren Proben in einem in einer Pufferlösung befindlichen Gel bei ausgezeichneter Vergleichbarkeit der Mobilität erlauben, ohne daß kostspielige Geräte für elektronische Umschaltprozesse oder sehr aufwendige Elektrophoreseapparate benötigt würden.

Eine erfindungsgemäße Lösung dieser Aufgabe ist mit ihren Weiterbildungen in den Patentansprüchen gekennzeichnet.

Die Erfindung wird im folgenden anhand eines Ausführungsbeispiels unter Bezugnahme auf die Zeichnung näher beschrieben, in der zeigen:

Fig. 1 eine Seitenansicht einer erfindungsgemäßen Elektrophoresevorrichtung,

Fig. 2 eine Draufsicht auf die in Fig. 1 dargestellte Vorrichtung, und

Fig. 3 das Ergebnis eines typischen Elektrophoreseexperiments.

Die erfindungsgemäße Elektrophoresevorrichtung besteht aus einem Unterteil, das dem herkömlicher Geräte zur Durchführung horizontaler Gelektorphoresen entsprechen kann. Von Bedeutung ist insbesondere, daß der Elektrophoresepuffer 11 umwälzbar und kühlbar ist.

Das in Fig. 1 und 2 dargestellte, zu dem oben beschriebenen Unterteil gehörende Oberteil 1 besteht aus einem Deckel 2, der durchbohrt 3 ist. Auf dem Deckel ist ein steuerbarer Motor 4 angebracht, dessen Achse 5 durch das Bohrloch 3 des Deckels 2 führt, und an derem unteren Ende die Trägereinrichtung 6 für die beiden Elektroden 7,8 befestigt ist. Eine Drehung der Motorachse um den Drehwinkel δ führt damit zu einer Drehung der Elektrodenträgervorrichtung um diesen Winkel, und damit gleichzeitig zu einer Drehung des homogenen elektrischen Feldes um den Winkel δ.

Bei Geräten, die zu einem Vergleich der Mobilität von Makromolekülen verschiedener Proben Verwendung finden sollen, ist es von besonderem Vorteil, wenn die Elektroden 7,8 gekrümmt ausgebildet sind. Die Anode 7 und Kathode 8 weisen jeweils die Form von Kreisbögen auf, deren zugehörige Mittelpunktswinkel α identisch sind. Ferner ist es bevorzugt, wenn sich die gekrümmten Elektroden exakt gegenüber stehen, um ein homogenes elektrisches Feld auszubilden. Das zur Trennung der Makromoleküle geeignete Medium, etwa ein Agarose-Gel 9, enthält die aufzutrennenden Proben, die in Agaroseblöcken gemäß US-PS 4 473 452 bzw. einer der oben genannten anderen Publikationen präpariert werden, in entsprechend geformten Schächten 10. Das Gel befindet sich in einer Pufferlösung 11.

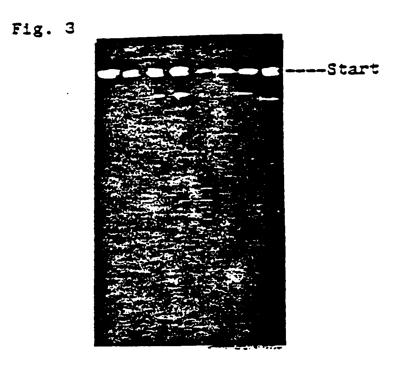

Im folgenden soll unter Bezugnahme auf Fig. 3 ein typisches Elektrophorese experiment mit der vorstehend erläuterten Elektrophoresevorrichtung beschrieben werden. Bei diesem Experiment werden exemplarisch chromosomale DNA-Moleküle der Hefe (Saccharomyces cerevisiae, Stamm WAY 5-4A) aufgetrennt. Selbstverständlich sind jederzeit Abweichungen von den hier gewählten experimentellen Parametern möglich.

Die Elektrophorese wird für 21 h in 0,25 x Tris-Borat-EDTA Puffer (1 x TBE ist 90 mM Tris, 90 mM Borsäure, 2,5 mM EDTA mit einem pH-Wert von 8,2) bei 8 ° C und einer konstanten Spannung von 110 V Gleichstrom mit kreisbogenförmigen Elektroden (Abstand 19 cm) durchgeführt, wobei die Makromoleküle in einem 1%igen Agarose-Gel (13,5 cm x 13,5 cm) getrennt werden. Hierbei wird die Elektrodenträgereinrichtung alle 90 s um den Drehwinkel δ (hier 120°) vor bzw. zurück bewegt. Nach Beendigung der Elektrophorese werden die getrennten DNA-Moleküle durch Ethidiumbromid und UV-Licht (302 nm) sichtbar gemacht. Eine charakteristische Auftrennung ist in Fig. 3 dargestellt, wobei "Start" die Position der Blöckchen angibt, die in die Schächte des Gels inseriert wurden. Unter den genannten Bedingungen lassen sich beim Hefestamm WAY 5-4A 12-14 intakte chromosomale DNA-Moleküle mit Längen von 250-2000 Kilobasenpaaren voneinander trennen, wobei die Makromoleküle verschiedener Proben ausgezeichnet miteinander zu vergleichen sind.

Das Hauptproblem bei PFGE- bzw. OFAGE-Experimenten wird durch das erfindungsgemäße Elektrophoreseverfahren vermieden, da die Elektrophoresedauer in einem typischen Experiment mit 21 h ungewöhnlich kurz ist und trotzdem zu einer hervorragenden Auftrennung der chromosomalen DNA-Moleküle führt. Es ist mit der erfindungsgemäßen Elektrophoresevorrichtung auch möglich, wesentlich kleinere oder sogar noch größere DNA-Moleküle als in Fig. 3 dargestellt, zu trennen. Zusätzlich gelingt es, Makromoleküle in einem Gel von Standardgröße (20 cm x 20 cm) unter Ausnutzung der gesamten Gelfläche vorzüglich zu separieren, wobei die Elektrophoresevorrichtung insgesamt lediglich Seitenmaße von etwa 35 cm x 35 cm aufweisen muß. Gegenüber den herkömmlichen, zur Trennung makromolekularer DNA geeigneten Geräten,insbesondere dem von Chu et al. (Science 234, 1582-1586, 1986) beschriebenen stellt dies einen erheblichen Fortschritt dar, so daß einer gewerblichen Nutzung der Erfindung nichts mehr im Wege steht. Hinzu kommt noch, daß die Steuerung des mit der Elektrodenträgereinrichtung verbundenen Motors im Vergleich zu der Umschaltelektronik bei PFGE etc. sehr einfach und preiswert herstellbar ist.

Zusammenfassend läßt sich feststellen, daß die erfindungsgemäße Vorrichtung die oben genannten Probleme bei der elektrophoretischen Trennung von Makromolekülen löst und damit zu einer entscheidenden Verbesserung und Vereinfachung der bestehenden Elektrophoreseverfahren führt.

Vorstehend ist die Erfindung anhand eines Ausführungsbeispiels ohne Beschränkung des allgemeinen Erfindungsgedankens beschrieben worden, wie er sich aus den Ansprüchen ergibt. Insbesondere ist durch das beschriebene Beispiel weder die Verwendung der erfindungsgemäßen Vorrichtung noch die Experimentführung und -dauer in irgendeiner Weise eingeschränkt. Auch können die Bemessungen jederzeit von den exemplarisch angegebenen Bemessungen abweichen.

**Patentansprüche**

1. Vorrichtung zur elektrophoretischen Trennung von Makromolekülen in einem Trennmedium (9),
   mit Elektroden (7,8), die außerhalb des Trennmediums (9) angeordnet sind und die ein elektrisches Feld erzeugen, dessen Orientierung relativ zum Trennmedium (9) verändert wird,
   dadurch gekennzeichnet, daß für die Elektroden (7,8) eine Trägereinrichtung (6) vorgesehen ist, die relativ zum Trennmedium (9) um eine Achse (5) drehbar gelagert ist, und die von einem steuerbaren Motor (4) derart angetrieben wird, daß der Drehwinkel zwischen den Orientierungen des elektrischen Feldes und der Zeitpunkt der Drehung beliebig einstellbar sind, und

daß die Elektroden (7,8) symmetrisch zur Drehachse (5) angeordnet sind.

2. Vorrichtung nach Anspruch 1, dadurch gekennzeichnet, daß die Elektroden (7,8) die Form von Kreisbögen haben, deren zugehörige Mittelpunktswinkel ($\alpha$) identisch sind.

3. Vorrichtung nach Anspruch 1, dadurch gekennzeichnet, daß die Elektroden (7,8) gerade ausgebildet sind.

**Claims**

1. Apparatus for the electrophoretic separation of macromolecules in a separating medium (9), comprising electrodes (7, 8) disposed outside said separating medium (9) and generating an electrical field whose orientation is varied relative to said separating medium (9),
**characterized** in that a holding means (6) is provided for holding said electrodes (7, 8), which is supported for rotation about an axis (5) relative to said separating medium (9), and which is driven by a controllable motor (4) in a manner that the angle of rotation between the orientations of the electrical field and the point of time of rotation may be optionally set, and that said electrodes (7, 8) are disposed in symmetrical relationship to said axis of rotation (5).

2. Apparatus according to Claim 1, **characterized** in that said electrodes (7, 8) have the shape of circular arcs whose associated center angles ($\alpha$) are identical.

3. Apparatus according to Claim 1, **characterized** in that said electrodes (7, 8) present a straight configuration.

**Revendications**

1. Dispositif pour la séparation électrophorétique de macromolécules dans un milieu de séparation (9),
comprenant des électrodes (7, 8) disposées au dehors dudit milieu de séparation (9) pour la génération d'un champs électrique dont l'orientation est variée relativement audit milieu de séparation (9),
**caractérisé** en ce que des moyens de maintien (6) sont disposés pour maintenir lesdites électrodes (7, 8), qui sont logés pour tourner autour d'un axe (5) relativement aux milieu de séparation (9), et qui sont agencés par un moteur contrôlable (4) de façon qu'on puisse régler l'angle de rotation entre les orientations du champs électrique et le temps de rotation à volonté,
et en ce que lesdites électrodes (7, 8) sont disposées en symétrie relativement audit axe de rotation (5).

2. Dispositif selon la revendication 1, **caractérisé** en ce que lesdites électrodes (7, 8) présentent la forme des arcs de cercle dont les angles ($\alpha$) de centre sont identiques.

3. Dispositif selon la revendication 1, **caractérisé** en ce que lesdites électrodes (7, 8) ont une configuration rectiligne.

EP 0 290 049 B1

Fig.1

Fig.2

Fig. 3

-----Start